(19) Europäisches Patentamt

European Patent Office

Office européen des brevets

(11) EP 1 076 794 B1

(12) EUROPÄISCHE PATENTSCHRIFT

(45) Veröffentlichungstag und Bekanntmachung des Hinweises auf die Patenterteilung:
28.01.2004 Patentblatt 2004/05

(51) Int Cl.⁷: F17C 5/02, F17C 1/00

(21) Anmeldenummer: 99920619.6

(22) Anmeldetag: 09.04.1999

(86) Internationale Anmeldenummer:
PCT/EP1999/002407

(87) Internationale Veröffentlichungsnummer:
WO 1999/054656 (28.10.1999 Gazette 1999/43)

(54) **VERFAHREN ZUM SPEICHERN VON TIEFSIEDENDEN PERMANENTEN GASEN ODER GASGEMISCHEN IN DRUCKBEHÄLTERN**

METHOD FOR STORING LOW-BOILING PERMANENT GASES OR GAS MIXTURES IN PRESSURISED CONTAINERS

PROCEDE POUR STOCKER DES GAZ OU DES MELANGES GAZEUX PERMANENTS A BAS POINT D'EBULLITION DANS DES RESERVOIRS SOUS PRESSION

(84) Benannte Vertragsstaaten:
AT BE CH CY DE DK ES FI FR GB GR IE IT LI LU MC NL PT SE

(30) Priorität: 18.04.1998 DE 19817324

(43) Veröffentlichungstag der Anmeldung:
21.02.2001 Patentblatt 2001/08

(73) Patentinhaber: Messer Griesheim GmbH
65933 Frankfurt am Main (DE)

(72) Erfinder:
• KESTEN, Martin
 D-51503 Rösrath (DE)
• BAYER, Gesa
 D-41564 Kaarst (DE)

(56) Entgegenhaltungen:
EP-A- 0 033 386     EP-A- 0 840 054
WO-A-98/53245       US-A- 4 336 689
US-A- 4 741 166

**Beschreibung**

Die Erfindung betrifft ein Verfahren, mit dessen Hilfe es möglich ist, tiefsiedende, permanente Gase mit höherem Wirkungsgrad in einem Druckbehälter zu speichern.

Mit dem Begriff "permanente Gase" seien hier solche Gase bezeichnet, die aufgrund der Lage ihrer kritischen Temperatur bei Raumtemperatur durch Druckerhöhung allein nicht zu verflüssigen sind.

Von besonderer Bedeutung ist dies für die Energiegase Wasserstoff und Erdgas. Damit diese als alternative Kraftstoffe in Fahrzeugen eingesetzt werden können, sind Behälter erforderlich, die bei sehr geringem Eigengewicht die Gase mit hohem Druck speichern können. Derartige Behälter sind aber auch für viele andere Anwendungsbereiche, in denen tiefsiedende, permanente Gase gespeichert werden müssen, vorteilhaft anwendbar.

Herkömmliche, metallische Druckbehälter, die mit einem Druck von 200 bis maximal 300 bar mit Hilfe von Kompressoren befüllt werden können, sind in der Lage, auch bei Verwendung sehr hochfester Druckbehälterstähle, nur geringe Mengen Gas bzw. Energie zu speichern. Auf Erdgas bezogen liegt ihr gewichts- bzw. volumenspezifischer Speicherwirkungsgrad bei etwa 0,6 kg/kWh und 0,55 l/kWh. Für herkömmliche Dieselkraftstofftanks liegen die Vergleichswerte bei 0,1 kg/kWh bzw. 0,1 l/kWh.

Zur Verringerung des Behältergewichts werden in jüngster Zeit alternative Druckgasbehälter beispielsweise aus Faserverbundwerkstoffen hergestellt. Diese Materialien haben selbst eine sehr niedrige Dichte und können in Faserrichtung sehr hohe Kräfte übertragen. Nach diesem Prinzip hergestellte Druckgasbehälter bestehen häufig aus einer hauptsächlich die Gasdichtheit verbessernden metallischen Hülle (Liner), die je nach Konzept vollständig oder nur im zylindrischen Teil von einer Faser-/Harzkombination umgeben ist, welche für die zur Aufnahme des Innendrucks notwendige Festigkeit sorgt. Mit derartigen Behältern läßt sich der gewichtsbezogene Speicherwirkungsgrad für Erdgas auf etwa 0,3 kg/kWh verbessern. Auf das Speichervolumen bezogen ändern sich die Verhältnisse allerdings nicht. Dies wäre nur dann der Fall, wenn die Behälter mit höheren Drücken befüllt werden könnten. Allerdings hat bis heute der für die Behälterfüllung notwendige hohe technische und energetische Aufwand für die bereitzustellende Kompressorleistung, die Installation von großen Hochdruck-Pufferbehältern und die zur Abführung der Kompressorwärme notwendigen, langen Befüllzeiten eine Speicherung von Druckgasen mit mehr als 300 bar verhindert.

Der Erfindung liegt daher die Aufgabe zugrunde, ein Verfahren und die dafür geeigneten Behälter zu schaffen, um permanente Gase mit verbessertem Wirkungsgrad zu speichern.

Diese Aufgabe wird erfindungsgemäß gelöst durch ein Verfahren mit den Merkmalen des Anspruchs 1.

Erreicht wird dies durch ein Verfahren, bei dem das zu speichernde, permanente Gas mit einer Siedetemperatur von höchstens -100°C in tiefkaltem, gasförmigem Zustand bei einer Temperatur von mindestens -250°C in den dafür geeigneten Behälter überführt wird. Der der Versuchstemperatur entsprechende hohe Gleichgewichtsdruck, dessen Höhe durch die eingefüllte Gasmenge bestimmt ist, stellt sich erst nach dieser Befüllung ein, wenn sich der Behälter und sein Gasinhalt auf Umgebungstemperatur erwärmt haben. Dies kann beispielsweise durch Wärmeaustausch mit der Umgebung oder auch durch aktive Beheizung bewirkt werden.

Je nachdem, wie groß die zugeführte Kaltgasmenge ist, können so ohne größeren technischen und energetischen Aufwand sehr hohe Speicherdrücke, insbesondere auch solche über 300 bar realisiert werden. Diese direkte Befüllung der Behälter mit dem tiefkalten Gas unterscheidet sich dabei grundlegend von der bereits bekannten Flüssigabfüllung hochsiedender Gase wie $CO_2$, $N_2O$ oder auch der höheren Kohlenwasserstoffe Propan, Butan usw. Die Siedetemperaturen dieser Gase liegen schon bei mäßiger Druckerhöhung auf Werte ziwschen 5 bar für Propan und 50 bar für $CO_2$ im Bereich der Raumtemperatur. Deswegen ist es eingeführte Praxis, diese Gase bei entsprechendem Druck in flüssigem Zustand in Druckgasbehälter abzufüllen.

Voraussetzung für die beschriebene Art der kompressorlosen Befüllung von Behältern mit permanenten Gasen oder Gasgemischen sind kryotaugliche Druckgasbehälter, die den durch die tiefkalte Befüllung ausgelösten, abrupten, lokalen Temperaturänderungen zwischen der Umgebungstemperatur und der Fülltemperatur, beispielsweise bis - 250 °C, standhalten und das eingefüllte Gas nach der Temperaturerhöhung bei den resultierenden Speicherdrücken sicher umschließen.

Die heute üblichen Druckgasbehälter sind diesen Anforderungen nicht gewachsen. Die für ganzmetallische Behälter ebenso wie für Liner verwendeten, niedrig legierten Druckbehälterstähle sind für den Einsatz bei sehr tiefen Temperaturen, wie sie für den Siedepunkt der "permanenten" Gase typisch sind, nicht geeignet, weil diese Stähle wegen ihres ferritischen Gefüges bei tiefen Temperaturen verspröden und damit ihre Zähigkeit verlieren.

Behälter, die aus kaltzähem, austenitischem Material hergestellt werden, können zwar bei tiefen Temperaturen eingesetzt werden, wegen ihrer geringen Werkstofffestigkeit sind sie aber für die hohen Drücke nicht geeignet, weil daraus sehr große Wandstärken und damit unzumutbar schwere Behälter resultieren Würden. Dies trifft auch für die in der DE 36 14 290 C 2 beschriebenen kryoverformten austenitischen Stähle zu, da auch deren Materialfestigkeit für die Herstellung von Druckgasbehältern mit hohen Betriebsdrücken, insbesondere solchen über 300 bar, nicht ausreicht.

Die erfindungsgemäßen Druckgasbehälter sind daher Verbundbehälter, die eine Hülle (Liner) aus dünnwandigem Chrom-Nickel-Stahl und eine Umwicklung mit einem Faserverbundmaterial aufweisen.

In einer bevorzugten Ausführungsform erhält die dünnwandige Chrom-Nickel-Stahlhülle ihre endgültigen Form- und Werkstoffeigenschaften durch einen Kryoformprozeß bei höchstens -75 °C.

Durch diesen Herstellungsprozeß erhält der erfindungsgemäße Verbundbehälter sowohl die Festigkeits- als auch die Zähigkeitseigenschaften, die für die in der Befüllphase auftretenden, extrem niedrigen Temperaturen und die damit verbundenen lokalen Thermospannungen erforderlich sind.

Die nach herkömmlichen Verfahren aus Blechteilen durch Schweißen, Tiefziehen, Drücken oder Blasen hergestellte und mit einem Füll-/Entnahmeanschluß versehene Vorform wird bei dem bevorzugten Kryoformprozeß auf eine tiefe Temperatur, vorzugsweise die des flüssigen Stickstoffs (-196 °C), abgekühlt und anschließend durch Innendruck so weit verformt, bis die endgültige, vorbestimmte Form erreicht ist. Die Temperatur muß unterhalb der Martensitbildungstemperatur Md des verwendeten Stahls liegen. Dies ist die Temperatur, oberhalb der unabhängig von der Größe der mechanischen Verformung keine martensitische Umwandlung stattfindet. Unter diesen , Bedingungen verfestigt sich das Material stärker als dies bei normaler Kaltverformung der Fall ist, weil sich das Gefüge zu einem Teil in Martensit umwandelt. Der Grad der Verfestigung entspricht dabei der Menge des umgewandelten Gefüges. Die Verformung der vorgefertigten Behälter erfolgt am zweckmäßigsten, nachdem sie durch Befüllen oder Eintauchen in flüssigen Stickstoff abgekühlt worden sind. Als Medium zur Erzeugung des für die Verformung erforderlichen Innendrucks kann entweder flüssiger Stickstoff selbst oder ein bei dieser Temperatur nicht kondensierendes Gas, zum Beispiel Helium, verwendet werden. Die Höhe des anzuwendenden Drucks richtet sich nach der angestrebten Form und Materialfestigkeit.

Die für das Herstellungsverfahren bevorzugten Werkstoffe sind die standardisierten, metastabilen austenitischen CrNi-Stähle, insbesondere die Typen 1.4301, 1.4307, 1.4306, 1.4541.

Bei zylindrischen Behältern mit halbkugelförmigen Böden unter innerem Überdruck tritt die höchste, für die Dimensionierung des Behälters maßgebende Spannung im zylindrischen Umfang auf.

$$\sigma_{Umfang} = \frac{Dm}{20} \cdot \frac{p}{s} \text{ (MPa)}$$

Dm:    Mittlerer zylindrischer Durchmesser (mm)

p:    Innendruck (bar)

s:    zylindrische Wanddicke (mm)

Die sich nach dieser Formel beim Kryoverformen einstellende Spannung entspricht der erzielten Materialfestigkeit $R_{p\,(Kryo)}$ (Streckgrenze bei der Verformungstemperatur). Wie Versuche mit entsprechend hergestellten Linern ergeben haben, ist diese wiederum mit der Zerreißfestigkeit des Materials bei Umgebungstemperatur $R_{m\,(RT)}$ gleichzusetzen, da sich herausgestellt hat, daß der Berstdruck der durch Kryoverformung hergestellten Liner in guter Übereinstimmung mit dem bei der Kryoverfestigung angewendeten Druck steht. Bei Kenntnis dieser Zusammenhänge ist es möglich, die herzustellenden Liner ihren betrieblichen Erfordernissen entsprechend auszulegen und in der beschriebenen Weise zu verfestigen.

Das Ergebnis ist ein Edelstahlliner, der trotz erheblich höherer Festigkeit als das Ausgangsmaterial seine Tieftemperaturtauglichkeit behalten hat.

Je nachdem für welche Betriebsdrücke der fertige Verbundbehälter vorgesehen ist, wird der auf die beschriebene Weise hergestellte Liner nach einem bekannten Verfahren ganz oder teilweise mit Glas-, Aramid- oder Kohlefaserverbundmaterial umgeben.

Der fertig umwickelte Behälter kann anschließend, zwecks Optimierung seines Spannungszustandes einem weiteren Verformungsprozeß unter Innendruck im Sinne einer Kaltstreckung unterzogen werden. Dieser Vorgang kann je nach Anforderung bei Umgebungstemperatur oder auch bei Kryotemperaturen erfolgen.

Der so hergestellte Verbundbehälter ist direkt mit tiefkaltem permanenten Gas befüllbar. Der angestrebte hohe Fülldruck des Gases stellt sich dann bei der Wiedererwärmung auf Umgebungstemperatur von selbst ein. Dabei werden in diesem Hochdruckbehälter je nach eingefüllter Kaltgasmenge auch Drücke größer 300 bar erzielt.

Ausführungsbeispiel für einen erfindungsgemäßen Erdgas-Fahrzeugtank:

In dem in einem Mittelklasse PKW für einen Erdgastank zur Verfügung stehenden zylindrischen Raum von 500 mm Durchmesser und 830 mm Länge kann ein auf die beschriebene Weise hergestellter Höchstdruckbehälter mit einem Auslegungsdruck von 600 bar untergebracht werden.

Der zylindrische Behälter mit zwei Halbkugelböden besteht aus einem kryoverfestigten Edelstahlliner mit 1,5 mm Wanddicke und einer Vollbewicklung aus CFK.

Ein derartiger Behälter mit einem Leergewicht von 65 kg kann 57 kg Methan aufnehmen. Das entspricht einem gewichtsbezogenen Speicherwirkungsgrad von 0,15 kg Systemgewicht pro kWh gespeicherte Energie. Für die besten nicht kryotauglichen 200 bar Speicherbehälter liegt dieser Wert um den Faktor 2 schlechter. Auf das Volumen bezogen ist der Speicherwirkungsgrad mit 0,25 l/kWh sogar um einen Faktor 3,6 besser als bei den derzeit leistungsfähigsten, herkömmlichen Verbundbehältern.

Das beschriebene Verfahren einer effizienten Hochdruckspeicherung durch kryogene Befüllung von erfindungsgemäß hergestellten, kryotauglichen Druckgasbehältern beschränkt sich natürlich nicht auf die als Beispiel angeführten Energiegase Wasserstoff, Methan und Erdgas. Es ist in gleicher Wiese auch auf andere tiefsiedende Gase wie Sauerstoff, Stickstoff, Edelgase oder deren Gasgemische, anwendbar.

## Patentansprüche

1. Verfahren zum Speichern von tiefsiedenden permanenten Gasen oder Gasgemischen in Druckbehältern durch die Befüllung des Druckbehälters im tiefkalten Zustand mit einem tiefsiedenden permanenten Gas mit einer Siedetemperatur von höchstens -100°C im tiefkalten gasförmigem Zustand bei einer Temperatur von mindestens -250°C und durch Herstellung eines Druckes im befüllten Druckbehälter durch Erwärmung des tiefkalten permanenten Gases oder Gasgemisches.

2. Verfahren nach Anspruch 1, **dadurch gekennzeichnet,** **daß** ein Druck von mehr als 300 bar im befüllten Druckbehälter durch Erwärmung des tiefkalten permanenten Gases oder Gasgemisches hergestellt wird.

3. Verfahren nach Anspruch 1 oder 2, **dadurch gekennzeichnet, dass** die Erwärmung des tiefkalten permanenten Gases durch aktive Beheizung erfolgt.

## Claims

1. Method for storing low-boiling permanent gases or gas mixtures in pressure vessels by filling the pressure vessel in the cryogenic state with a low-boiling permanent gas with a boiling point of at most -100°C in the cryogenic gaseous state at a temperature of at least -250°C and by producing a pressure in the filled pressure vessel by heating the cryogenic permanent gas or gas mixture.

2. Method according to Claim 1, **characterized in that** a pressure of more than 300 bar is produced in the filled pressure vessel by heating the cryogenic permanent gas or gas mixture.

3. Method according to Claim 1 or 2, **characterized in that** the heating of the cryogenic permanent gas is effected by active heating.

## Revendications

1. Procédé pour stocker des gaz ou des mélanges gazeux permanents à bas point d'ébullition dans des réservoirs sous pression, en remplissant le réservoir sous pression à l'état réfrigéré, d'un gaz permanent à bas point d'ébullition à une température d'ébullition de -100°C maximum à l'état gazeux, réfrigéré à une température d'au moins -250°C et en générant une pression dans le réservoir rempli sous pression en élevant la température du gaz ou du mélange gazeux permanent réfrigéré.

2. Procédé selon la revendication 1, **caractérisé en ce que** une pression supérieure à 300 bars est générée dans le réservoir rempli sous pression en élevant la température du gaz ou du mélange gazeux permanent réfrigéré.

3. Procédé selon la revendication 1 ou 2, **caractérisé en ce que** la hausse de la température du gaz permanent réfrigéré a lieu par un chauffage actif.